(19) **Europäisches Patentamt**
**European Patent Office**
**Office européen des brevets**

(11) **EP 3 515 989 B1**

(12) **FASCICULE DE BREVET EUROPEEN**

(45) Date de publication et mention
de la délivrance du brevet:
**01.12.2021 Bulletin 2021/48**

(51) Int Cl.:
***C08L 95/00*** *(2006.01)*

(21) Numéro de dépôt: **17780511.6**

(86) Numéro de dépôt international:
**PCT/FR2017/052587**

(22) Date de dépôt: **26.09.2017**

(87) Numéro de publication internationale:
**WO 2018/055315 (29.03.2018 Gazette 2018/13)**

(54) **ENROBE HYDROCARBONE ADAPTE POUR INTEGRER UN DISPOSITIF POUR ECHANGEUR DE CHALEUR**

ZUR INTEGRATION EINER WÄRMETAUSCHERVORRICHTUNG GEEIGNETE
KOHLENWASSERSTOFFBASIERTE MISCHUNG

HYDROCARBON-BASED MIX SUITABLE FOR INTEGRATING A HEAT EXCHANGER DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2016 FR 1659055**

(43) Date de publication de la demande:
**31.07.2019 Bulletin 2019/31**

(73) Titulaire: **Eurovia SA**
**92500 Rueil Malmaison (FR)**

(72) Inventeurs:
• **FAUCON-DUMONT, Stéphane**
**33127 Martignas sur Jalles (FR)**
• **GIANETTI, Thomas**
**33200 Bordeaux (FR)**
• **PIRAUD, Florian**
**33185 Le Haillan (FR)**

(74) Mandataire: **Regimbeau**
**20, rue de Chazelles**
**75847 Paris Cedex 17 (FR)**

(56) Documents cités:
**FR-A1- 2 984 876**

**Description**

L'invention concerne un enrobé hydrocarboné maniable, compact, résistant à l'orniérage et isolant. Cet enrobé est particulièrement adapté pour intégrer un dispositif pour échangeur de chaleur visant à réchauffer la chaussée.

Ils existent à peu près 32 millions de kilomètres de routes revêtues dans le monde. Les chaussées sont des surfaces plus ou moins planes, généralement de couleur foncée, ce qui les rend intéressantes pour cette invention : leurs propriétés thermiques font qu'elles sont capables d'emmagasiner des quantités notables d'énergie thermique pendant la journée, grâce à l'ensoleillement reçu. Dans un contexte mondial de développement des énergies renouvelables, il semble tout à fait judicieux d'essayer de récupérer cette énergie gratuite captée par les chaussées.

Parmi les différents matériaux utilisés pour la construction des chaussées, en particulier l'asphalte coulé, les enrobés bitumineux, le béton, le macadam ou le sable, les enrobés bitumineux sont un des matériaux qui monte le plus en température au cours de la journée à cause de sa réflectivité moindre et de sa conductivité thermique modérée.

Un enrobé hydrocarboné est un mélange d'une fraction granulaire, comprenant des granulats et du sable, et de liant hydrocarboné appliqué en une ou plusieurs couches pour constituer la chaussée des routes.

Les enrobés hydrocarbonés à chaud sont fabriqués à chaud (généralement de 130°C à 170°C) et appliqués à chaud (généralement de 110°C à 160 °C).

L'enrobé tiède rencontre toutes les spécifications de l'enrobé à chaud, mais il est produit et mis en œuvre à une température inférieure de 30°C à 60°C par rapport à l'enrobé à chaud. Ainsi, les enrobés hydrocarbonés tièdes sont fabriqués à des températures allant de 100°C à 140°C et appliqués à des températures allant de 80°C à 130 °C.

Les enrobés hydrocarbonés à chaud ou tièdes sont déposés par répandage, par exemple avec un finisseur ou une niveleuse, puis compactés.

L'invention vise à proposer un enrobé hydrocarboné optimisé pour l'incorporation de tuyaux d'un dispositif pour échangeur de chaleur.

Cet enrobé hydrocarboné doit pouvoir limiter les espaces vides autour des tuyaux, protéger sans les dégrader les tuyaux, et supporter par la suite les machines de chantier puis tout trafic, en particulier les forts trafics.

L'invention a pour objet des enrobés hydrocarbonés à chaud ou tièdes comprenant une fraction granulaire et un liant hydrocarboné, **caractérisés en ce que** les éléments de la fraction granulaire ont des dimensions comprises entre 0 mm et 10 mm, **et en ce que** le liant hydrocarboné comprend un additif de maniabilité, présentant une température de fusion supérieure à 60°C et inférieure à 130°C, lesdits enrobés hydrocarbonés étant résistants à l'orniérage, compacts et maniables, avec une maniabilité, mesurée avec un maniabilimètre Nynas à la température de mise en œuvre des enrobés hydrocarbonés, inférieure à 350N et isolants avec une conductivité thermique, $\lambda$, inférieure à 1 W/m.K..

Les éléments de la fraction granulaire des enrobés hydrocarbonés ont des dimensions comprises entre 0 mm et 10 mm, avantageusement entre 0 mm et 6 mm. La fraction granulaire comprend les éléments listés dans la revendication 1.

Il a été découvert que cette faible granulométrie permet d'améliorer le contact entre les tuyaux et l'enrobé hydrocarboné.

Par "fractions solides minérales", on entend ici toutes fractions solides utilisables pour la réalisation d'enrobés hydrocarbonés notamment pour la construction routière, comprenant notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, les granulats artificiels de toute origine et provenant par exemple de mâchefers d'incinération des ordures ménagères (MIDN), ainsi que leurs mélanges en toutes proportions.

Dans le cadre de l'invention, la fraction granulaire comprend avantageusement :

- des éléments inférieurs à 0,063 mm (filler ou fines)
- du sable dont les éléments sont compris entre 0,063 mm et 2 mm ;
- des éléments, en particulier des gravillons, ayant des dimensions

   ∘ comprises entre 2 mm et 6 mm ;
   ∘ éventuellement, comprises entre 6 mm et 10 mm;

La taille des granulats minéraux est mesurée par les essais décrits dans la norme NF EN 933-2 (version mai 1996).

Par « fines minérales » ou « filler », on entend toute charge minérale ou siliceuse, passant à travers un tamis à maille carrée de 0,063 mm de côté. Les fines peuvent être des fines naturelles ou d'apport, par exemple des fines calcaires (carbonate de calcium), du ciment ou de la chaux hydratée, ou de récupération.

On entend par « agrégats d'enrobés » des enrobés (mélange de granulats et de liants bitumineux) provenant de fraisage de couches d'enrobé, de concassage de plaques extraites de chaussées en enrobés, de morceaux de plaques d'enrobés, de déchets d'enrobés ou de surplus de productions d'enrobés (les surplus de productions sont des matériaux enrobés ou partiellement enrobés en centrale résultant des phases transitoires de fabrication).

Dans la fraction granulaire, la teneur en fines (éléments ayant une taille inférieure ou égale à 0,063 mm), varie avantageusement de 4% à 15% en volume, par rapport au volume total de la fraction granulaire.

Dans la fraction granulaire, la teneur en éléments ayant une taille supérieure à 0,063 mm et inférieure ou égale à 2 mm, en particulier du sable, varie avantageusement de 15 % à 80 % en volume, par rapport au volume total de la fraction granulaire.

Dans la fraction granulaire, la teneur en éléments ayant une taille supérieure à 2 mm, avantageusement jusqu'à 6 mm, varie de 5 à 81% en volume, par rapport au volume total de la fraction granulaire.

Les enrobés comprennent un liant. Le liant est ce qui permet de coller les granulats entre eux et d'assurer une bonne tenue mécanique de la chaussée. Un liant peut être bitumineux ou végétal ou de synthèse. Le liant peut également être un mélange de liants issus de ces différentes origines. Le liant peut également être un mélange de liants issus de ces différentes origines.

On entend par « liant », un liant hydrocarboné, avantageusement d'origine fossile, ou tout liant d'origine végétale ou synthétique, utilisable pour la réalisation d'un enrobé hydrocarboné. Avantageusement, il s'agit de toute composition contenant du bitume, un additif de maniabilité et éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'en ajuster les propriétés, comme par exemple l'adhésivité. À titre d'exemple, on citera les bitumes, les bitumes modifiés par des élastomères et/ou des plastomères.

Le liant est de grade 35/50.

Dans une variante avantageuse de l'invention, on utilisera les liants routiers répondant aux normes NF EN 12591 (2009, bitumes purs) ou NF EN 13924 (2006, bitumes durs) ou NF EN 14023 (2010, bitume modifié polymère).

Avantageusement, le liant comprend également un polymère.

Le « polymère » modifiant le liant auquel il est fait référence ici, peut être choisi parmi les polymères naturels ou synthétiques. Il s'agit par exemple d'un polymère de la famille des élastomères, synthétiques ou naturels, et de manière indicative et non limitative :

-   les copolymères statistiques, multi-séquencés ou en étoile, de styrène et de butadiène ou d'isoprène en toutes proportions (en particulier copolymères blocs de styrène-butadiène-styrène (SBS), de styrène-butadiène (SB, SBR pour styrène-butadiène rubber), de styrène-isoprène-styrène (SIS)) ou les copolymères de même famille chimique (isoprène, caoutchouc naturel, ...), éventuellement réticulés in-situ, en particulier les copolymères statistiques, multi-séquencés ou en étoile, de styrène et de butadiène ou d'isoprène en toutes proportions

-   les copolymères d'acétate de vinyle et d'éthylène en toutes proportions,

-   les copolymères de l'éthylène et d'esters de l'acide acrylique, méthacrylique ou de l'anhydride maléique, les copolymères et terpolymères d'éthylène et de méthacrylate de glycidyle-) et les polyoléfines, en particulier le polyéthylène.

Le polymère est avantageusement choisi parmi les copolymères statistiques, multi-séquencés ou en étoile, de styrène et de butadiène ou d'isoprène, les copolymères d'acétate de vinyle et d'éthylène et le polyéthylène.

Le polymère modifiant le bitume peut être choisi parmi les polymères de récupération, par exemple des « poudrettes de caoutchouc » ou autres compositions à base de caoutchouc réduits en morceaux ou en poudre, par exemple obtenues à partir de pneus usagés ou d'autres déchets à base de polymères (câbles, emballage, agricoles, ...) ou encore tout autre polymère couramment utilisé pour la modification des bitumes tels que ceux cités dans le Guide Technique écrit par l'Association Internationale de la Route (AIPCR) et édité par le Laboratoire Central des Ponts et Chaussées "Use of Modified Bituminous Binders, Special Bitumens and Bitumens with Additives in Road Pavements" (Paris, LCPC, 1999), ainsi que tout mélange en toute proportion de ces polymères.

Dans le cas de polymère de récupération, en particulier de déchet, pratiquement il pourra être ajouté lors de l'enrobage, par exemple avec la fraction minérale solide.

La teneur en polymère dans le liant varie avantageusement de 2% à 20% en poids, plus avantageusement de 2% à 10% en poids, encore plus avantageusement de 4% à 8% en poids, par rapport au poids total du liant.

Dans les enrobés selon l'invention, la teneur en liant varie avantageusement de 7,5% à 24% en volume, par au volume total de l'enrobé, plus avantageusement de 11% à 23% en volume.

Les enrobés hydrocarbonés utilisés dans le procédé selon l'invention sont maniables.

La température de mise en œuvre des enrobés hydrocarbonés est avantageusement inférieure à 130°C, plus avantageusement comprise entre 60°C et 120°C, encore plus avantageusement comprise entre 90°C et 120°C.

Des enrobés hydrocarbonés particulièrement adaptés ont une maniabilité, mesurée avec un maniabilimètre Nynas à la température de mise en œuvre des enrobés hydrocarbonés, inférieure à 350N, avantageusement inférieure à 300 N, plus avantageusement inférieure à 250 N.

Les enrobés hydrocarbonés selon l'invention sont déposés par répandage, par exemple avec un finisseur ou une niveleuse, puis compactés. Ce compactage permet de réduire la teneur en vides (V), inférieure, après mise en œuvre et refroidissement, à 15%, plus avantageusement inférieure à 10% (cf. norme NF EN 12697-5, -6, -8 de 2012).

Les enrobés hydrocarbonés utilisés dans le procédé selon l'invention sont également, avantageusement, compacts.

La compacité (C) de la formule d'enrobé mesurée au moyen d'une presse à cisaillement giratoire à 60 girations, selon la norme NF EN 12697-31 d'août 2007 est avantageusement supérieure à 90%, plus avantageusement supérieure à 93%. La compacité peut aller jusqu'à 99,9%.

On rappelle que C+V=100.

Le liant hydrocarboné des enrobés hydrocarbonés comprend un additif, présentant une température de fusion supérieure à 60°C et inférieure à 130°C. L'additif présente une température de fusion supérieure à 60°C, avantageusement supérieure à 80°C. L'additif a une température de fusion inférieure à 130°C, avantageusement inférieure à 120°C. Un tel additif permet de conférer de la maniabilité aux enrobés hydrocarbonés.

Cet additif permet de réduire la viscosité du liant pour abaisser la température de fabrication et de mise en œuvre des enrobés hydrocarbonés tout en conservant les propriétés mécaniques requises, améliorer la maniabilité, améliorer la compacité.

Avantageusement, l'additif est choisi parmi un triglycéride d'acides gras. En particulier, l'acide gras est choisi dans le groupe constitué par les acides gras saturés comprenant de 12 à 30 atomes de carbone, éventuellement substitués par au moins une fonction hydroxyle ou par un radical alkyle en $C_1$-$C_4$, en particulier l'acide gras est choisi dans le groupe constitué par l'acide 12-hydroxy-octadécanoïque, l'acide hexadécanoïque, l'acide octadécanoïque, l'acide 9,10-dihydroxy-octadécanoïque, l'acide icosanoïque, l'acide nonadécanoïque, et leurs mélanges.

L'additif de maniabilité est avantageusement un triglycéride d'acides gras, l'acide gras étant avantageusement choisi dans le groupe défini précédemment. En particulier, l'additif comprend au moins un triglycéride dont une molécule d'acide gras est constituée de l'acide 12-hydroxy-octadécanoïque. Un tel additif est par exemple décrit dans la demande EP 2 062 941.

La teneur en additif de maniabilité sera avantageusement comprise entre 1% et 6% en masse par rapport à la masse totale en liant.

Par ailleurs, les enrobés hydrocarbonés sont avantageusement résistants à l'orniérage, plus avantageusement avec un pourcentage d'ornières après 30 000 cycles inférieur à 7,5%, avantageusement inférieur à 5%.

Le système est ainsi adapté à un trafic routier, y compris à fort trafic.

Cette résistance à l'orniérage résulte notamment du squelette de la fraction granulaire et du type de liant utilisé.

Le cas échéant, pour optimiser la résistance à l'orniérage, on utilisera avantageusement un liant additivé de polymères, tel que décrit précédemment.

Lorsque les enrobés hydrocarbonés comprennent un additif de maniabilité à changement d'état, cet additif va également permettre d'assurer une bonne résistance à l'orniérage.

On peut également ajouter de l'acide polyphosphorique, tel que par exemple décrit dans les brevets WO2007/143016, WO2011/153267, WO2006/119354, FR 2 852 018.

La conductivité thermique des enrobés hydrocarbonés est notamment réglée par le type de granulats.

La conductivité thermique, $\lambda$, des enrobés hydrocarbonés est inférieure à 1 W/m.K, avantageusement elle est inférieure à 0,8 W/m.K, plus avantageusement inférieure ou égale à 0,7 W/m.K. La conductivité thermique sera généralement supérieure à 0,033 W/m.K.

Avantageusement, la fraction granulaire des enrobés hydrocarbonés comprend des éléments choisis parmi des granulats légers de masse volumique inférieure à 2,6 $t/m^3$, avantageusement de masse volumique inférieure à 1,6 $t/m^3$.

Avantageusement, tout ou partie des granulats légers sont des granulats légers non absorbants ayant un coefficient d'absorption d'eau inférieur à 15%. Avantageusement, les granulats légers et non absorbants ont avantageusement une masse volumique comprise entre 1,1 $t/m^3$ et 1,5 $t/m^3$.

En plus d'être légers, les granulats sont avantageusement non absorbants. La propriété de « non absorbant » se caractérise par la mesure du coefficient d'absorption d'eau. Au sens de la présente invention, un granulat non absorbant est un granulat qui a un coefficient d'absorption d'eau inférieur à 15%, avantageusement compris entre 3% et 15%, plus avantageusement compris entre 6% et 13%.

Le coefficient d'absorption d'eau se mesure selon le protocole normalisé décrit dans la norme NF EN 1097-6 (version juin 2001 complété par la version de février 2006). Le « coefficient d'absorption d'eau » est le rapport de l'augmentation de masse d'un échantillon de granulats à sa masse sèche, après passage à l'étuve, du fait de la pénétration de l'eau dans les pores accessibles à l'eau. On calcule le coefficient d'absorption d'eau (en pourcentage de la masse sèche) (*WA*24) conformément à l'équation suivante :

$$WA24 = \frac{100 \times (M1 - M4)}{M4}$$

où :

*M*1 est la masse des granulats saturés et superficiellement secs dans l'air, en grammes ;

M4 est la masse de la prise d'essai séchée à l'étuve dans l'air, en grammes ;

Les masses M1 et M4 sont mesurées selon le protocole suivant. Les granulats sont immergés dans de l'eau (température ambiante, en particulier 22 ± 3°C) pendant un temps suffisant (avantageusement 24 heures). Les granulats sont ensuite récupérés, séchés au chiffon, étalés en couche mono-granulaire et laissés exposés à l'air libre mais à l'abri des rayons du soleil ou de toute autre source de chaleur jusqu'à ce que les films d'eau visibles aient disparu. On pèse les granulats (*M*1). Ensuite, on transfère les granulats sur un plateau et on les place dans l'étuve à une température de (110 ± 5) °C jusqu'à masse constante (M4).

Le coefficient d'absorption d'eau est mesuré par la méthode au pycnomètre (les granulats sont chargés dans un pycnomètre rempli d'eau).

Ces granulats légers et non absorbants présentent par ailleurs une bonne résistance mécanique.

Ces granulats ont avantageusement un pourcentage de vide supérieur à 50%, les pores étant majoritairement des pores fermés. Ainsi, avantageusement plus de 90% en nombre des pores sont des pores fermés, avantageusement plus de 95%, et jusqu'à 100% des pores sont des pores fermés. Ces pores fermés permettent d'assurer que le liant n'est pas absorbé par les granulats. Ainsi, les propriétés de l'enrobé n'évoluent pas plus que celles d'un enrobé classique. Le pourcentage de vide est avantageusement supérieur à 60%, plus avantageusement compris entre 65% et 80%, encore plus avantageusement compris entre 65% et 75%. Le pourcentage en vide peut être déterminé par la méthode géométrique, telle que celle décrite dans la norme NF EN 12697-6 d'août 2012, ou par une méthode gamma densimétrie, telle que celle décrite dans la norme NF EN 12697-7 de juin 2003.

Ces granulats légers et non absorbants sont avantageusement de l'ardoise expansée, en particulier de l'ardoise expansée de Mayenne. Plus avantageusement, ces granulats sont les granulats commercialisés par la société Granulats Expansés de la Mayenne sous la marque Granulex®.

Les enrobés selon l'invention peuvent également comprendre un ou plusieurs additif(s). Des additifs peuvent être ajoutés soit au liant, soit au granulat, soit à l'enrobé.

Les additifs peuvent également être utilisés à des fins esthétiques, notamment pour un changement de couleur des produits routiers finaux. Il peut s'agir ainsi de pigment naturel ou non, tel que l'oxyde fer.

L'invention a également pour objet un revêtement de voiries comprenant au moins une couche des enrobés hydrocarbonés selon l'invention.

En particulier, dans le revêtement de voiries, la couche des enrobés hydrocarbonés selon l'invention constitue une couche d'intégration comprenant des tuyaux d'un dispositif pour échangeur de chaleur.

Avantageusement, le dispositif pour échangeur de chaleur intégré dans la couche d'intégration ne comprend pas d'élément métallique. Les tuyaux sont avantageusement en polymère. Ainsi, les matériaux constituant le dispositif (les tuyaux, le substrat et éléments d'attache éventuels, tels qu'ils seront décrits par la suite) ne font pas obstacle à un recyclage, avantageusement simultané, des enrobés.

Selon la norme NF P 98-149, juin 2002, on entend :

- par « recyclage », l'introduction, dans un cycle de fabrication d'enrobés à chaud ou tièdes, d'une proportion donnée d'enrobés de récupération (enrobés recyclés). Le recyclage peut être réalisé en centrale ou en place. Dans ce dernier cas, il peut être réalisé, soit par thermorecyclage, soit par fraisage à froid, malaxage à chaud des agrégats (fraisats) dans un matériel automoteur, et remise en place.

- par « thermorecyclage », recyclage en place par chauffage, fractionnement, malaxage de l'enrobé ancien avec les correctifs nécessaires (enrobé, granulats et liant de régénération) et remise en œuvre du mélange obtenu

- par « fraisage », une opération de désagrégation et d'enlèvement de matériaux liés à l'aide d'un tambour rotatif équipé d'outils adaptés (dents, pics, couteaux).

La couche d'intégration comprend avantageusement moins de 10%, plus avantageusement moins de 5%, encore plus avantageusement moins de 1%, en volume de polymère par m$^3$ d'enrobés hydrocarbonés. Ainsi, cette couche, après rabotage lors de la réfection de la chaussée, peut être recyclée et réutilisée sans traitement préalable.

L'épaisseur de la couche d'intégration varie avantageusement de d à 10 cm, plus avantageusement de d à 8 cm, avec d représentant le diamètre des tuyaux.

La profondeur d'intégration varie avantageusement de 0,5 d à 1,5 d, plus avantageusement de 0,8 d à 1,2 d, avec d représentant le diamètre des tuyaux. Pour assurer une planéité de la couche d'intégration, il est souhaitable que pas plus de la moitié du diamètre des tuyaux dépasse de la couche. Par contre, pour assurer de bons échanges thermiques, les tuyaux doivent être aussi proches que possible de la surface.

Le revêtement de voirie selon l'invention se caractérise notamment en ce que des tuyaux d'un dispositif pour échangeur de chaleur sont intégrés dans une couche d'enrobés hydrocarbonés selon l'invention, dite couche d'intégration. Cette couche d'intégration pourra supporter tout trafic, y compris des forts trafics.

Au moins un fluide caloporteur va pouvoir circuler dans les tuyaux.

Le revêtement de voirie comprend, au-dessus de la couche d'intégration, au moins une couche de revêtement de voirie :

i. adaptée aux trafics, des faibles trafics aux forts trafics en fonction des compositions des couches de la chaussée

ii. qui va capter l'énergie solaire (en mode récupération d'énergie) ou qui sera à réchauffer (en mode restitution d'énergie)

La voirie pourra être de large surface, ce qui fournira un échangeur thermique de grande dimension.

Pour optimiser les rendements énergétiques, la couche d'intégration est proche de la surface. En particulier, l'épaisseur combinée de la ou des couche(s) appliquée(s) au-dessus de ladite couche d'intégration est inférieure à 30 cm, avantageusement inférieure à 10 cm. Elle peut par exemple varier de 2 cm à 30 cm, avantageusement de 6 cm à 10 cm.

La couche de revêtement de voirie pourra comprendre un multicouche constitué à minima d'une couche de liaison et d'une couche de roulement.

Dans une variante, la couche de liaison a une épaisseur allant de 4 cm à 14 cm, avantageusement de 4 cm à 7 cm.

Dans une variante, la couche de roulement a une épaisseur allant de 2 cm à 10 cm, avantageusement de 5 cm à 7 cm.

Pour toutes les épaisseurs, sauf indication contraire, il s'agit de l'épaisseur après compactage.

Pour certaines applications, telles que le déneigement de chaussées, on cherche à orienter au maximum l'énergie transportée par le fluide caloporteur, circulant dans les tuyaux, vers la surface. La couche d'intégration isolante permet de minimiser toute déperdition de chaleur ailleurs que vers la surface.

En complément, le revêtement de voiries selon l'invention peut comprendre, en-dessous de la couche d'intégration selon l'invention, une couche de matériaux isolants.

Ces matériaux isolants peuvent par exemple être une couche d'enrobés comprenant les granulats légers décrits précédemment, une isolation thermique en verre cellulaire qui se présente sous forme de plaques de format 60 cm x 45 cm ou 120 cm x 60 cm, et composée de bulles de verre rigides et hermétiquement closes commercialisé sous le nom FOAMGLAS®, du polystyrène, ...

Avantageusement, la conductivité thermique, λ, de la couche de matériaux isolants est inférieure à 1 W/m.K.

Cette couche de matériaux isolant peut aussi remplir la fonction de couche support.

Le revêtement peut également comprendre une couche d'adhésion venant améliorer l'adhésion entre la couche isolante et les enrobés hydrocarbonés de la couche d'intégration. Elle répond aux spécifications de la norme NF P 98-150-1, de juin 2010.

Une couche d'accrochage peut être déposée sur la couche d'intégration. Cette couche d'accrochage permet d'améliorer l'accrochage entre les enrobés hydrocarbonés de la couche d'intégration et la couche de roulement ou la couche de liaison. Elle permet également de protéger la couche d'intégration comprenant le dispositif pour échangeur thermique.

La couche d'accrochage répond aux spécifications de la norme NF P 98-150-1, de juin 2010.

Le revêtement peut également comprendre au-dessus de la couche d'intégration ou de la couche d'accrochage, le cas échéant, une couche colorée servant d'avertisseur visuel.

Les couches de surface du revêtement de voiries constituent un échangeur thermique fonctionnant en captation ou en restitution de chaleur, en fonction du climat, de large surface.

En fonctionnement, un fluide caloporteur circule dans les tuyaux du dispositif pour échangeur thermique. Le fluide caloporteur peut être de l'eau ou de l'eau glycolée pour diminuer le point de congélation et la résistance au froid. On préfère une eau glycolée non nocive de nature mono-propylène glycol.

Des additifs, notamment des additifs fongicides et bactéricides, pourront être ajoutés au fluide caloporteur. Ainsi, on évite un traitement de surface des tuyaux, telle qu'une barrière anti-oxygène, qui pourrait être défavorable à l'adhésion.

Les tuyaux sont reliés à tout système thermique adapté, incluant une nappe de géothermie en profondeur, une sonde géothermique verticale, une pompe à chaleur, ...

L'invention a également pour objet un procédé de fabrication d'un revêtement de voiries selon l'invention.

En particulier, l'invention a pour objet un procédé de fabrication d'un revêtement de voiries comprenant un dispositif pour échangeur de chaleur, caractérisé en ce que le procédé comprend les étapes suivantes :

- Application sur une surface d'au moins une couche des enrobés hydrocarbonés selon l'invention pour former une couche d'intégration ;
- Intégration dans la couche de surface, de préférence en sa partie supérieure, de tuyaux d'un dispositif pour échangeur de chaleur.

Les enrobés hydrocarbonés sont répandus selon les procédés traditionnels, avantageusement au finisseur. On pourra utiliser des enrobés hydrocarbonés à chaud ou tièdes, avec une préférence pour des enrobés hydrocarbonés tièdes.

En particulier, la température de mise en œuvre des enrobés hydrocarbonés est inférieure à 160°C, avantageusement inférieure à 140°C, plus avantageusement inférieure à 130°C. Dans un mode de réalisation, la température de mise en œuvre des enrobés hydrocarbonés est comprise entre 60°C et 120°C, avantageusement comprise entre 90°C et 120°C.

Dans un premier mode de réalisation, les tuyaux du dispositif pour échangeur de chaleur sont indentés dans la couche d'intégration avant compactage des enrobés hydrocarbonés.

Dans ce premier mode de réalisation, le procédé comprend avantageusement les étapes suivantes :

a) répandage à une température inférieure à 160°C d'enrobés hydrocarbonés selon l'invention, puis
b) dépôt de tuyaux, lesdits tuyaux ayant une résistance à l'écrasement supérieure à 3000 N par mètre linéaire de tuyaux à 100°C, une dilatation thermique inférieure à 200.10$^{-6}$ K$^{-1}$ à 20°C de sorte à permettre leur indentation même en l'absence de moyen de refroidissement ou de moyen de mise sous pression, puis
c) indentation des tuyaux déposés dans ladite couche d'intégration par compactage desdits enrobés pendant la durée de maniabilité desdits enrobés, pour former une couche d'intégration comprenant les tuyaux d'un dispositif pour échangeur de chaleur, puis
d) application au-dessus d'une couche de surface pour revêtement de voirie, en particulier une couche de roulement.

Le procédé selon l'invention permet d'intégrer les tuyaux du dispositif pour échangeur de chaleur dans une couche d'intégration lors de la réalisation de la chaussée intégrant ladite couche d'intégration.

La pose des tuyaux simultanée à la conception de la couche d'intégration selon l'invention permet d'assurer un contact optimal entre les tuyaux et les enrobés hydrocarbonés et ainsi limiter la présence de vide autour des tuyaux.

Les tuyaux sont indentés dans la couche d'intégration pendant la durée de mise en œuvre de l'enrobé hydrocarboné de la couche d'intégration, avant la fin du compactage. Cette durée de mise en œuvre est définie par la maniabilité de l'enrobé hydrocarboné.

Les tuyaux sont avantageusement en polymère. En effet, on souhaite que la présence du dispositif dans le revêtement de voirie n'en impacte pas sa recyclabilité. Le polymère est choisi en fonction de la température d'application des enrobés hydrocarbonés. On choisit un polymère ayant une température de fusion ou de ramollissement ou de transition vitreuse supérieure à la température d'application des enrobés hydrocarbonés.

Une caractéristique importante de ces tuyaux est leur résistance à l'écrasement et leur dilatation thermique.

La résistance à l'écrasement est la force obtenue lorsque le tuyau est écrasé de telle manière que son diamètre extérieur est divisé par deux par rapport à son diamètre initial.

Les tuyaux ont une résistance à l'écrasement supérieure à 3000 N par mètre linéaire de tuyaux à 100°C, avantageusement supérieure à 4500 N, plus avantageusement supérieure à 10 000 N.

En particulier, les tuyaux ont une résistance à l'écrasement comprise entre 3000 N et 100 000 N, avantageusement entre 4500 N et 100 000 N, plus avantageusement entre 10 000 N et 100 000 N, par mètre linéaire de tuyaux à 100°C.

La dilatation thermique des tuyaux est avantageusement inférieure à 200.10$^{-6}$ K$^{-1}$ à 20°C, plus avantageusement inférieure à 160.10$^{-6}$ K$^{-1}$ à 20°C. La dilatation thermique des tuyaux est généralement supérieure à 10.10$^{-6}$ K$^{-1}$ à 20°C.

On a en effet constaté, de manière surprenante, que dans les enrobés hydrocarbonés selon l'invention, lorsque les tuyaux présentent une telle résistance à l'écrasement et une telle dilatation thermique, lors du passage du compacteur, les tuyaux s'indentent sans se déformer et restent en place, même au niveau des virages. Il n'est pas nécessaire de les remplir avec un liquide de refroidissement ou un quelconque autre moyen de protection thermique et/ou mécanique et/ou de mise sous pression des tuyaux. Ceci constitue un avantage économique significatif.

Lors du chantier, les extrémités du tuyau pourront rester ouvertes sur l'extérieur et les tuyaux seront simplement remplis de l'air ambiant. On peut ainsi dire que les tuyaux sont posés à vide.

Dans une autre variante, de l'eau, avantageusement à une température inférieure à 80°C, en particulier allant de 5°C à 30°C, est mise en circulation dans les tuyaux avant et/ou pendant et/ou après indentation, en particulier pendant et/ou juste après indentation.

Une indentation réussie dépend à la fois de la maniabilité de l'enrobé hydrocarboné et de la résistance à l'écrasement du tuyau. Plus le tuyau est résistant à l'écrasement, plus le seuil de tolérance sur la maniabilité des enrobés sera large. Plus les enrobés hydrocarbonés sont maniables, plus le seuil de tolérance sur la résistance à l'écrasement des tuyaux sera large.

Cependant, quel que soit l'enrobé maniable, le tuyau présente une résistance à l'écrasement supérieure à 3000 N par mètre linéaire de tuyaux à 100°C.

Cependant, quel que soit le tuyau, la maniabilité minimale de l'enrobé, mesurée avec un maniabilimètre Nynas à la température de mise en œuvre des enrobés hydrocarbonés, est inférieure à 400N.

Dans un mode de réalisation de l'invention, la maniabilité de l'enrobé est comprise entre 300 N et 400 N. Alors, la résistance à l'écrasement des tuyaux est supérieure à 4500 N par mètre linéaire de tuyaux à 100°C.

Dans un autre mode de réalisation de l'invention, la maniabilité de l'enrobé est inférieure à 300 N. Alors, la résistance à l'écrasement des tuyaux est supérieure à 3000 N par mètre linéaire de tuyaux à 100°C.

Par le procédé selon le premier mode de réalisation de l'invention, les tuyaux ne sont pas dégradés, en particulier déformés, par les rouleaux du compacteur et restent en position, quel que soit leur courbure, et ainsi y compris dans les boucles ou virages.

Comme cela est de pratique, le compactage pourra se faire en plusieurs passes.

Avantageusement, on n'applique pas de vibration lors du compactage. Ainsi, avantageusement, lors de l'étape c) on n'applique pas de vibration.

Pour un même polymère, la rigidité des tuyaux pourra être augmentée en augmentant l'épaisseur de peau des tuyaux.

Avantageusement, le retrait à chaud des tuyaux, mesuré selon la norme NF EN ISO 2505, de 2005, est inférieur à 3% (en étuve, à 150°C pendant 60 mn), plus avantageusement inférieur à 2%.

Une autre caractéristique avantageuse des tuyaux est leur adhérence au liant. On considère que les tuyaux adhèrent au bitume lorsque le critère suivant est rempli : les tuyaux sont badigeonnés d'émulsion cationique de bitume à 65% de bitume, lors de cette opération si l'émulsion ne perle pas à la surface l'adhérence du tuyau est suffisante.

De tels tuyaux adhèrent aux enrobés hydrocarbonés selon l'invention et s'indentent donc plus facilement lors du compactage.

A titre d'exemple de polymère adapté, on peut citer le polyéthylène haute densité, le polypropylène, les copolymères bloc éthylène-propylène.

Les tuyaux du dispositif ont avantageusement un diamètre allant de 5 mm à 30 mm. Les tuyaux du dispositif ont avantageusement une épaisseur de peau allant de 1 mm à 5 mm.

Les tuyaux sont avantageusement préalablement mis en forme à la géométrie souhaitée. Ainsi, le procédé selon l'invention comprend une étape dans laquelle on impose une géométrie aux tuyaux du dispositif pour échangeur de chaleur avant l'étape b) de dépôt.

Cette étape peut être réalisée précédemment en usine ou en atelier bord de voie.

La géométrie imposée peut être toute géométrie permettant d'optimiser les échanges thermiques de la nappe en fonctionnement, notamment en fonction des applications recherchées. Le procédé selon l'invention permet d'indenter les tuyaux quel que soit leur courbure et ainsi offre une large souplesse sur la géométrie.

D'un point de vue thermique, les échanges sont favorisés lorsque les tuyaux indentés du dispositif dessinent un motif comprenant N lignes droites parallèles sensiblement de même longueur et N-1 virages dont l'angle de courbure peut varier de 90° à 180°. L'espacement entre les droites parallèles sera avantageusement de 10 cm à 45 cm, plus avantageusement de 20 cm à 40 cm.

Avant l'étape b), les tuyaux pourront être libres ou positionnés sur un substrat.

Lorsqu'ils sont libres, leur géométrie est avantageusement imposée par mémoire de forme.

Autrement, le substrat sert à maintenir la géométrie et ainsi faciliter le positionnement des tuyaux en les supportant.

Le substrat est par exemple constitué d'un géo-matériau synthétique, tel qu'un géotextile ou une géogrille, constitué de polymère, éventuellement de bitume, éventuellement de fibres minérales ou organiques, tissé ou non tissé. Le substrat est de préférence perméable à l'eau et à l'émulsion de bitume pour favoriser le collage. Les fibres peuvent en particulier être des fibres de verre.

Le substrat peut rester dans la couche d'intégration ou être enlevé après l'étape b) ou c).

Le substrat restant dans la couche d'intégration après l'indentation, il permet également de renforcer la structure de ladite couche.

Avantageusement, les matériaux constituant le substrat permettent également un recyclage simultané des enrobés hydrocarbonés de la couche d'intégration.

Le dispositif est avantageusement conditionné en plaque ou en rouleau, plus avantageusement en rouleau. Le conditionnement en plaque limite les dimensions pour assurer une livraison par camion : les dimensions maximum d'une cargaison sont une longueur de 12 m pour une largeur de l'ordre de 2,60 m.

Il est de préférence conditionné en usine mais il peut être préparé en atelier bord de voie.

Le conditionnement en plaque ou en rouleau permet la pose du dispositif en même temps que la réalisation de la chaussée et permet d'assurer des cadences compatibles avec la conduite d'un chantier. Avantageusement, la cadence de pose et d'indentation est supérieure à 2 m/min, plus avantageusement de 4 m/min à 10 m/min.

Le conditionnement en plaque ou en rouleau permet également de limiter les éléments introduits dans la chaussée afin de conserver les propriétés mécaniques de la route.

Un grand avantage du procédé selon le premier mode de réalisation de l'invention est que le compactage peut être réalisé directement, sans nécessiter d'étape(s) supplémentaire(s) de protection des tuyaux.

En outre, les étapes suivantes, d'application au-dessus de la couche d'intégration de la ou des couche(s) de surface pour revêtement de voirie peuvent être réalisées directement, sans nécessiter d'étape(s) supplémentaire(s) de protection des tuyaux. En effet, la couche d'intégration permet non seulement de maintenir au sol la géométrie recherchée mais également de protéger les tuyaux.

Le procédé selon ce premier mode de réalisation :

-　Permet d'indenter des tuyaux avec la géométrie retenue, quel que soit la courbure des tuyaux et pouvant ainsi comprendre des virages, des boucles, ...
-　Ne laisse pas d'espaces vides entre les tuyaux et la couche les intégrant, ne nécessitant ainsi pas l'ajout d'une couche adhésive pour combler des espaces vides et/ou d'un matériau de comblement ;
-　Ne nécessite pas de refroidissement des tuyaux par mise en circulation d'un agent refroidissant, pendant la pose et/ou l'indentation et/ou les étapes subséquentes de fabrication du revêtement de voiries y compris lors du passage des machines de chantier ;
-　Ne nécessite pas une mise sous pression des tuyaux pendant la pose et/ou l'indentation et/ou les étapes subséquentes de fabrication du revêtement de voiries y compris lors du passage des machines de chantier ;

- Ne nécessite pas un contrôle de l'angle des tuyaux avec l'axe du rouleau compacteur ;
- permet un échange thermique optimisé, notamment en minimisant la quantité de vide autour des tuyaux de l'échangeur de chaleur
- Est économique, de mise en œuvre aisée, permettant

  ◦ l'installation à haute cadence d'un échangeur de chaleur
  ◦ de préparer un revêtement de voirie pouvant supporter tout trafic, y compris un fort trafic

Dans un deuxième mode de réalisation, les tuyaux du dispositif pour échangeur de chaleur sont intégrés dans des réservations créées en surface de la couche d'intégration.

Dans ce deuxième mode de réalisation, le procédé comprend avantageusement les étapes suivantes :

a) répandage à une température inférieure à 160°C d'enrobés hydrocarbonés selon l'invention pour former une couche d'intégration, puis
b) création de réservations dans la couche d'intégration formée à l'étape précédente,
c) dépôt de tuyaux dans les réservations crées à l'étape précédente, puis
d) le cas échéant, application d'un matériau de comblement, puis
e) application au-dessus d'une couche de surface pour revêtement de voirie, en particulier une couche de roulement.

Ces réservations peuvent être réalisées :

- à chaud, c'est-à-dire pendant la durée de mise en œuvre de l'enrobé hydrocarboné de la couche d'intégration, avant la fin du compactage. Ainsi, elles sont créées lors de la réalisation de la route intégrant ladite couche d'intégration, ou
- A froid, par exemple par fraisage.

Pour créer des réservations à chaud, on peut appliquer sur la couche d'enrobés hydrocarbonés un dispositif D1 permettant des créer, par pression, une empreinte et ainsi les réservations.

Le dispositif D1 peut être une forme pré-fabriquée, réalisé en matière rigide ou souple. La section est de préférence circulaire et de dimensions proches des tuyaux à intégrer, avantageusement de 1,2 d à 1,5 d, d étant le diamètre des tuyaux.

Après formation de la réservation à chaud, le dispositif D1 est enlevé.

La pression sur le dispositif D1 peut être assisté mécaniquement ou par un engin de travaux comme un compacteur de chaussée.

Alternativement, la réservation à chaud peut être réalisée par un dispositif D2 équipé d'un outil permettant de créer une réservation par déplacement de l'outil pendant la période de mise en œuvre de l'enrobé hydrocarboné selon l'invention.

D2 peut être un tambour cranté permettant par son mouvement et son poids de s'indenter et créer la réservation nécessaire. De préférence le mouvement de D2 est une rotation.

D2 est conçu pour ne pas dégrader la couche dans lequel l'indentation est réalisé : Il maintient, en dehors du cran d'indentation, le compactage de l'enrobé et il évite la formation de bourrelet.

Les tuyaux peuvent être posés soit pendant la durée de mise en œuvre des enrobés soit après la fin du compactage : immédiatement en fin de compactage ou plusieurs heures à plusieurs jours après.

Tout comme dans le premier mode de réalisation, les tuyaux sont avantageusement en polymère.

Lorsque les tuyaux sont posés soit pendant la durée de mise en œuvre des enrobés, le polymère est choisi en fonction de la température d'application des enrobés hydrocarbonés. On choisit un polymère ayant une température de fusion ou de ramollissement supérieure à la température d'application des enrobés hydrocarbonés.

Dans ce deuxième mode de réalisation, la rigidité, le retrait thermique et l'adhérence au bitume des tuyaux peut être moins critique. Lorsque les tuyaux sont posés pendant la durée de mise en œuvre des enrobés, on préférera néanmoins utiliser les tuyaux du premier mode de réalisation. Lorsque les tuyaux sont posés après, tout type de tuyau peut être utilisé.

Dans un mode de réalisation, de l'eau, avantageusement tempérée, est mise en circulation dans les tuyaux, en particulier après l'étape c) et avant l'étape e).

Un substrat peut être utilisé pour faciliter la pose des tuyaux. Ce substrat est avantageusement tel que décrit dans le premier mode de réalisation.

Alternativement, ou en complément au substrat, des attaches pourront être utilisées pour maintenir les tuyaux en place dans les réservations.

Tout comme dans le premier mode de réalisation, on utilise avantageusement des matériaux qui n'impactent pas le recyclage du revêtement de voirie.

La création des réservations à chaud combiné à une pose des tuyaux pendant la durée de mise en œuvre des enrobés permet d'éviter l'étape d), d'ajout d'un matériau de comblement. En effet, l'enrobé selon l'invention est suffisamment maniable et compact pour combler tout l'espace.

Les étapes subséquentes pour la fabrication du revêtement de voirie peuvent être réalisées directement, sans nécessiter d'étape(s) supplémentaire(s) de protection des tuyaux.

Au besoin, un produit de comblement peut être utilisé pour combler les interstices entre le tuyau et les réservations. A titre d'exemple de produit de comblement adapté, on peut citer les enrobés, les émulsions de bitume, les enrobés coulés à froid, les coulis cimentaires, les bétons, les matériaux polymère. On préfèrera un matériau à base de liant bitumineux.

Le produit de comblement peut permettre :

- De sceller le tuyau dans la réservation ;
- D'assurer un bon contact chaussée / tuyau ;
- De doper les transferts thermiques.

Les réservations peuvent également être créées à froid, c'est-à-dire après la durée de mise en œuvre des enrobés.

Les réservations à froid sont avantageusement réalisées par un outil d'usinage. Un engin de chantier adapté est de préférence une fraiseuse dont le tambour est conçu pour réaliser un tranchage de chaussée correspondant au calepinage souhaité. Ce dispositif permet de faire des rainurages longitudinaux ou transversaux. L'épaisseur des saignées ainsi que l'écartement entre les saignées est défini par le calepinage et piloté par le tambour. Des profils de saignée en V, U et carrée, préférentiellement U et carrée, sont possibles suivant l'orientation des dents. Le retour des boucles, c'est-à-dire les coudes des tuyaux à 180°, est assuré par le rabotage d'une bande transversale, par exemple de largeur de 35 cm ; ou des saignées en forme de couronne réalisée par des carottiers.

Cet usinage peut être réalisé par robot. Le robot est équipé d'un système permettant de trancher la chaussée. L'exécution de la réservation se fait à partir d'une maquette numérique définissant le trajet du robot pour réaliser le calepinage souhaité. Le robot peut aussi être piloté manuellement sur site. Dans le cas de la première méthode, et afin de ne pas créer la saignée de 35 cm, le robot, peut terminer le calepinage en usinant les virages nécessaires.

Dans un mode de réalisation, de l'eau, avantageusement tempérée, est mise en circulation dans les tuyaux, en particulier après l'étape c) et avant l'étape e).

Un substrat peut être utilisé pour faciliter la pose des tuyaux. Ce substrat est avantageusement tel que décrit dans le premier mode de réalisation.

Alternativement, ou en complément au substrat, des attaches pourront être utilisées pour maintenir les tuyaux en place dans les réservations.

Tout comme dans le premier mode de réalisation, on utilise avantageusement des matériaux qui n'impactent pas le recyclage du revêtement de voirie.

Les étapes subséquentes pour la fabrication du revêtement de voirie peuvent être réalisées directement, sans nécessiter d'étape(s) supplémentaire(s) de protection des tuyaux.

Un produit de comblement peut être utilisé pour combler les interstices entre le tuyau et les réservations. A titre d'exemple de produit de comblement adapté, on peut citer les enrobés, les émulsions de bitume, les enrobés coulés à froid, les coulis cimentaires, les bétons, les matériaux polymère. On préfèrera un matériau à base de liant bitumineux.

Le produit de comblement peut permettre :

- De sceller le tuyau dans la réservation ;
- D'assurer un bon contact chaussée / tuyau ;
- De doper les transferts thermiques.

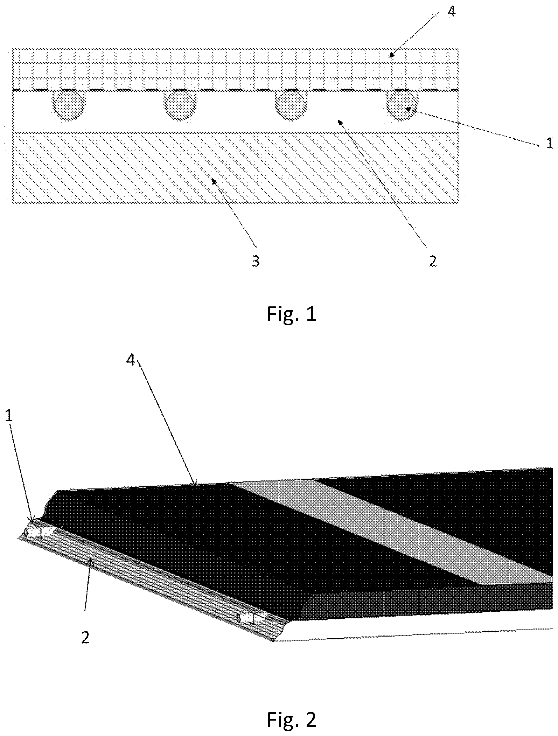

Une vue en coupe d'un revêtement de voiries comprenant en surface un dispositif pour échangeur de chaleur est représentée sur la figure 1.

Les tuyaux 1, dans lesquels circule un fluide caloporteur, sont indentés dans une couche d'intégration 2. Cette couche d'intégration 2 peut être de forte conductivité ou isolante, en fonction de la nature de la fraction granulaire de l'enrobé hydrocarboné.

Cette couche d'intégration 2 est déposée sur une couche support 3, qui pourra être une couche isolante. Cette couche support 3 est avantageusement isolante lorsque la couche d'intégration 2 n'est pas elle-même isolante.

Sur la couche d'intégration 2 est déposée une couche de roulement 4. Cette couche de roulement 4 a une forte conductivité et constitue l'échangeur thermique qui va capter l'énergie solaire ou constitue la surface à réchauffer, notamment en vue d'un déneigement ou déverglaçage de chaussée.

Sur la figure 2, on a représenté la couche d'intégration 2 comprenant les tuyaux 1 sur laquelle une couche de roulement 4 est déposée.

Sur la figure 3, un exemple de géométrie possible des tuyaux 1 dans la couche d'intégration 2 est représenté.

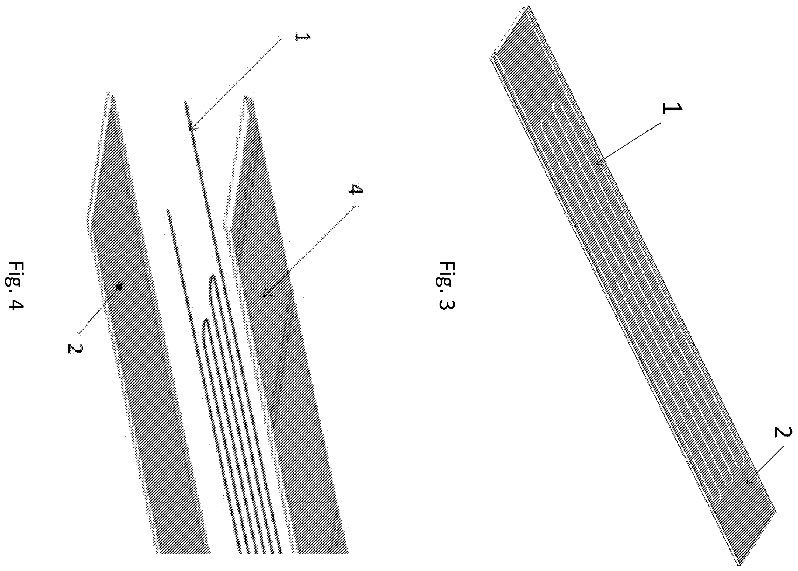

Une vue éclatée de la couche d'intégration 2, des tuyaux 1 et de la couche de roulement 4 est représentée sur la figure 4.

**Protocoles** :

*Maniabilité* :

Un essai de maniabilité réalisé suivant la norme 98-258-1, de 2013, et adapté :

- avec un maniabilimètre Nynas (version dit « grand volume » et ayant une largeur de 30 cm, une longueur de 32 cm et une hauteur de 13 cm)
- mesurer à une compacité de 75 % (teneur en vide : 25%)
- avec une température inférieure ou égale à la température de mise en œuvre (température adaptée)

*Compacité :*

La compacité d'une formule est mesurée au moyen d'une presse à cisaillement giratoire (NF EN 12697-31 d'août 2007). Une éprouvette cylindrique d'enrobé est compactée en combinant une action de cisaillement rotative et une force résultante axiale appliquée par une tête mécanique. Cet essai permet de déterminer la compacité d'une éprouvette pour un nombre de giration donné en mesurant la hauteur d'éprouvette associée.

*Essai d'indentation en laboratoire :*

Un enrobé est mis en œuvre dans sur banc de compactage suivant la norme NF P 12697-33 de septembre 2007, dans un moule de dimension 500 mm x 180 mm à sa température de mise en œuvre. La compacité de l'enrobé est amené à 75% par un compactage au rouleau. Les tuyaux sont positionnés à la surface de l'enrobé, transversalement au sens de circulation du rouleau. Ils sont maintenus en place par un ruban de scotch placé dans le sens de circulation du rouleau. Les tuyaux sont indenté dans l'enrobé par 6 à 10 passages de rouleau.

La bonne indentation du tuyau est jugée visuellement sur deux critères : la forme de l'empreinte laissée par le tuyau dans l'enrobé : celle-ci doit être profonde d'une dimension proche du diamètre du tuyau. La forme de la section du tuyau à l'issu de l'essai, celui-ci doit ne doit pas s'être ovalisé.

*Mesures de conductivité thermique :*

Pour déterminer la conductivité thermique, une éprouvette cylindrique (diamètre 16 cm, épaisseur qui peut varier, le plus souvent de 5 cm à 10 cm) du matériau à caractériser, après une durée de murissement de 14 jours, est soumise à une différence de température : 25°C sur une face, 10°C sur l'autre face. La mesure du flux thermique la traversant, la différence de température entre les faces et l'épaisseur de l'éprouvette permettent de déterminer la conductivité thermique du matériau en utilisant la relation :

$$\varnothing = -\lambda . \Delta T / L$$

avec :

- $\lambda$ la conductivité thermique exprimée en W/m.K
- $\varnothing$ le flux thermique traversant l'éprouvette exprimé en W/m$^2$
- $\Delta T$ la différence de température aux bords de l'éprouvette exprimée en °C ou Kelvin
- L La hauteur de l'éprouvette

*Ecrasement :*

Pour déterminer la résistance à l'écrasement des tuyaux, un échantillon de tuyau, d'une longueur comprise entre 5 cm et 10 cm est découpé. Cet échantillon est ensuite placé pendant 2 heures dans une étuve à une température de 100°C. L'essai d'écrasement est ensuite réalisé à la température de 100°C. L'échantillon est ensuite positionné, sur sa génératrice, entre les deux plateaux parallèles d'une presse, placés dans une enceinte climatique régulée à 100°C. La presse impose à l'échantillon un déplacement de 10 mm/min. La valeur de résistance à l'écrasement est déterminée lorsque le diamètre de l'échantillon est divisé par deux par rapport au diamètre initial de l'échantillon. Elle est exprimée en Newton par mètre linéaire de tuyau en utilisant la relation :

$$Rt = Ft / Lt$$

avec :

- Rt : résistance à l'écrasement du tuyau
- Ft : force développée pour écraser le tuyau jusqu'à une réduction de moitié de son diamètre
- Lt : longueur de l'échantillon soumis à l'essai

Dilatation thermique : elle est mesurée selon la norme NF EN ISO 2505, de 2005,

*Adhérence au bitume :*

Les tuyaux adhèrent au bitume lorsque le critère suivant est rempli : les tuyaux sont badigeonnés d'une émulsion cationique de bitume 50/70 dosée à 65% en poids de bitume conforme à la norme NF EN 13808 d'août 2013 à l'aide un pinceau. Après une minute on procède à un examen visuel. Si l'émulsion ne perle pas à la surface l'adhérence du tuyau est suffisante.

## Revendications

1. Enrobés hydrocarbonés choisis parmi les enrobés à chaud ou les enrobés tièdes comprenant une fraction granulaire et un liant hydrocarboné, **caractérisés en ce que** les éléments de la fraction granulaire des enrobés hydrocarbonés ont des dimensions comprises entre 0 mm et 10 mm et la fraction granulaire comprend

   - 4 à 15% en volume, par rapport au volume total de la fraction granulaire, de fines, ayant une taille inférieure à 0,063 mm
   - 15 à 80% en volume, par rapport au volume total de la fraction granulaire, de sable, ayant une taille comprise entre 0,063 mm et 2 mm
   - 5 à 81% en volume, par rapport au volume total de la fraction granulaire, de granulats, ayant une taille comprise entre 2 mm et 10 mm

   , **et en ce que** le liant hydrocarboné est un bitume de grade 35/50 et comprend un additif de maniabilité, présentant une température de fusion supérieure à 60 °C et inférieure à 130°C,
lesdits enrobés hydrocarbonés étant résistants à l'orniérage, compacts et maniables, avec une maniabilité, mesurée avec un maniabilimètre Nynas à la température de mise en œuvre des enrobés hydrocarbonés, inférieure à 350N et isolant avec une conductivité thermique, λ, inférieure à 1 W/m.K.

2. Enrobés hydrocarbonés selon l'une quelconque des revendications précédentes, **caractérisés en ce que** la teneur en liant varie avantageusement de 7,5 à 24% en volume, par rapport au volume total de l'enrobé.

3. Enrobés hydrocarbonés selon l'une quelconque des revendications précédentes, **caractérisés en ce que** leur température de mise en œuvre est inférieure à 130°C, avantageusement comprise entre 60°C et 120°C, plus avantageusement comprise entre 90°C et 120°C.

4. Enrobés hydrocarbonés selon l'une quelconque des revendications précédentes, **caractérisés en ce que** l'une ou plusieurs des caractéristiques suivantes sont respectées :

   - la maniabilité, mesurée avec un maniabilimètre Nynas à la température de mise en œuvre des enrobés hydrocarbonés, est inférieure à 300N, avantageusement inférieure à 250N;
   - la compacité de la formule d'enrobé mesurée au moyen d'une presse à cisaillement giratoire à 60 girations, selon la norme NF EN 12697-31 d'août 2007, est supérieure à 90% ;
   - ils sont résistants à l'orniérage avec un pourcentage d'ornières après 30 000 cycles inférieur à 7,5%, avantageusement inférieur à 5%.

5. Enrobés hydrocarbonés selon l'une quelconque des revendications précédentes, **caractérisés en ce que** le liant comprend de 1% à 6% en poids dudit additif de maniabilité, par rapport au poids du liant, avantageusement l'additif de maniabilité est un triglycéride d'acides gras, l'acide gras étant choisi dans le groupe constitué par les acides gras saturés comprenant de 12 à 30 atomes de carbone, éventuellement substitués par au moins une fonction hydroxyle ou par un radical alkyle en $C_1$-$C_4$, en particulier l'acide gras est choisi dans le groupe constitué par l'acide 12-hydroxy-octadécanoïque, l'acide hexadécanoïque, l'acide octadécanoïque, l'acide 9,10-dihydroxy- octadécanoïque, l'acide icosanoïque, l'acide nonadécanoïque, et leurs mélanges .

6. Enrobés hydrocarbonés selon l'une quelconque des revendications précédentes, **caractérisés en ce que** le liant comprend un élastomère, avantageusement choisi parmi les copolymères statistiques, multi-séquencés ou en étoile, de styrène et de butadiène ou d'isoprène en toutes proportions.

7. Enrobés hydrocarbonés selon l'une quelconque des revendications précédentes, **caractérisés en ce que** la fraction granulaire comprend des éléments choisis parmi des granulats légers et non absorbants ayant une masse volumique comprise entre 1,1 t/m³ et 1,5 t/m³ et un coefficient d'absorption d'eau compris entre 6 % et 15 %.

8. Revêtement de voiries comprenant au moins une couche des enrobés hydrocarbonés selon l'une quelconque des revendications précédentes.

9. Revêtement de voiries selon la revendication précédente, **caractérisé en ce que** la couche des enrobés hydrocarbonés selon l'une quelconque des revendications 1 à 7 constitue une couche d'intégration comprenant des tuyaux d'un dispositif pour échangeur de chaleur.

10. Revêtement de voiries selon la revendication précédente, **caractérisé en ce que** l'épaisseur de la couche d'intégration varie de d à 10 cm, avantageusement de d à 8 cm, avec d représentant le diamètre des tuyaux.

11. Revêtement de voiries selon l'une quelconque des revendications 9 à 10, **caractérisé en ce qu'**il comprend, au-dessus de la couche d'intégration, au moins une couche de revêtement de voirie.

12. Procédé de fabrication d'un revêtement de voiries selon l'une quelconque des revendications 9 à 11 comprenant les tuyaux d'un dispositif pour échangeur de chaleur, **caractérisé en ce que** le procédé comprend les étapes suivantes :

   - Application sur une surface d'au moins une couche des enrobés hydrocarbonés selon l'une quelconque des revendications 1 à 8 pour former une couche d'intégration ;
   - Intégration dans la couche d'intégration, de préférence en sa partie supérieure, de tuyaux d'un dispositif pour échangeur de chaleur.

13. Procédé selon la revendication précédente, **caractérisé en ce que** les tuyaux du dispositif pour échangeur de chaleur sont indentés dans la couche d'intégration avant compactage des enrobés hydrocarbonés.

14. Procédé selon la revendication 12, **caractérisé en ce que** les tuyaux du dispositif pour échangeur de chaleur sont intégrés dans des réservations créées en surface de la couche d'intégration.

**Patentansprüche**

1. Kohlenwasserstoffasphalt, ausgewählt aus Heißasphalt und Warmasphalt, umfassend eine granulare Fraktion und ein Kohlenwasserstoff-Bindemittel, **dadurch gekennzeichnet, dass** die Elemente der granularen Fraktion des Kohlenwasserstoffasphalts Dimensionen aufweisen zwischen 0 mm und 10 mm und wobei die granulare Fraktion umfasst

   - 4 bis 15 Vol.-% im Verhältnis zum Gesamtvolumen der granularen Fraktion, von Feinmaterial, eine Mindestgröße von 0,063 mm aufweisend
   - 15 bis 80 Vol.-% im Verhältnis zum Gesamtvolumen der granularen Fraktion, von Sand, eine Größe zwischen 0,063 mm und 2 mm aufweisend
   - 5 bis 81 Vol.-%, im Verhältnis zum Gesamtvolumen der granularen Fraktion, von Granulaten, eine Größe zwischen 2 mm und 10 mm aufweisend

   **und dadurch, dass** das Kohlenwasserstoff-Bindemittel ein Bitumen vom Grad 35/50 ist und einen Handhabbarkeits-Zusatzstoff umfasst, eine Schmelztemperatur über 60 °C und unter 130 °C aufweisend,
   wobei der Kohlenwasserstoffasphalt spurresistent, kompakt und handhabbar ist, mit einer Handhabbarkeit, gemessen mit einem Nynas-Handhabungsmesser bei einer Verarbeitungstemperatur des Kohlenwasserstoffasphalts, unter 350N und isolierend mit einer thermischen Leitfähigkeit, $\lambda$, unter 1 W/m.K.

2. Kohlenwasserstoffasphalt nach einem der vorhergehenden Ansprüche, **dadurch gekennzeichnet, dass** der Bindemittelgehalt in Bezug auf das Gesamtvolumen des Asphalts bevorzugt zwischen 7,5 und 24 Vol.-% variiert.

3. Kohlenwasserstoffasphalt nach einem der vorhergehenden Ansprüche, **dadurch gekennzeichnet, dass** seine Betriebstemperatur unter 130 °C liegt, bevorzugt zwischen 60 °C und 120 °C, bevorzugter zwischen 90 °C und 120 °C.

4. Kohlenwasserstoffasphalt nach einem der vorhergehenden Ansprüche, **dadurch gekennzeichnet, dass** eine oder mehrere der folgenden Eigenschaften eingehalten wurden:

   - die Handhabbarkeit, gemessen mit einem Nynas-Handhabungsmesser bei der Betriebstemperatur des Kohlenwasserstoffasphalts, liegt unter 300N, bevorzugt unter 250N;
   - die Kompaktheit der Asphaltformel, gemessen mit einer Kreiselscherenpresse bei 60 Umdrehungen, gemäß der Norm NF EN 12697-31 vom August 2007 liegt über 90 %;
   - er ist spurrinnenresistent bei einem Anteil an Spurrinnen nach 30.000 Zyklen unter 7,5 %, bevorzugt unter 5 %.

5. Kohlenwasserstoffasphalt nach einem der vorhergehenden Ansprüche, **dadurch gekennzeichnet, dass** das Bindemittel zwischen 1 Gew.-% und 6 Gew.-% des Handhabbarkeits-Zusatzstoffes umfasst, im Verhältnis zu dem Gewicht des Bindemittels, der Handhabbarkeits-Zusatzstoff bevorzugt ein Fettsäuretriglycerid ist, wobei die Fettsäure ausgewählt ist aus der Gruppe bestehend aus gesättigten Fettsäuren, umfassend 12 bis 30 Kohlenstoffatome, möglicherweise ersetzt durch wenigstens eine Hydroxyl-Funktion oder durch eine ein $C_1$-$C_4$-Alkylradikal, insbesondere die Fettsäure ausgewählt ist aus der Gruppe bestehend aus 12-Hydroxy-Octadecansäure, Hexadecansäure, Octadecansäure, 9,10-Dihydroxyoctadecansäure, Icosansäure, Nonadecansäure und deren Gemischen.

6. Kohlenwasserstoffasphalt nach einem der vorhergehenden Ansprüche, **dadurch gekennzeichnet, dass** das Bindemittel ein Elastomer umfasst, bevorzugt ausgewählt aus statistischen, multisequenziellen oder sternförmigen Copolymeren von Styren und Buadien oder von Isopren in allen Proportionen.

7. Kohlenwasserstoffasphalt nach einem der vorhergehenden Ansprüche, **dadurch gekennzeichnet, dass** die granulare Fraktion Elemente umfasst ausgewählt aus leichten und nicht absorbierenden Granulaten mit einer Volumenmasse zwischen 1,1 t/m$^3$ und 1,5 t/m$^3$ und einem Wasserabsorbations-Koeffizienten zwischen 6 % und 15 %.

8. Fahrbahnbelag, umfassend wenigstens eine Schicht von Kohlenwasserstoffasphalt nach einem der vorhergehenden Ansprüche.

9. Fahrbahnbelag nach dem vorhergehenden Anspruch, **dadurch gekennzeichnet, dass** die Schicht von Kohlenwasserstoffasphalt nach einem der Ansprüche 1 bis 7 eine Integrationsschicht ist, umfassend Leitungen einer Wärmetauschervorrichtung.

10. Fahrbahnbelag nach dem vorhergehenden Anspruch, **dadurch gekennzeichnet, dass** die Dicke der Integrationsschicht zwischen d und 10 cm variiert, bevorzugt zwischen d und 8 cm, wobei d für den Durchmesser der Leitungen steht.

11. Fahrbahnbelag nach einem der Ansprüche 9 bis 10, **dadurch gekennzeichnet, dass** er über der Integrationsschicht wenigstens eine Fahrbahnbelagsschicht umfasst.

12. Verfahren zur Herstellung eines Fahrbahnbelags nach einem der Ansprüche 9 bis 11, umfassend die Leitungen einer Wärmetauschervorrichtung, **dadurch gekennzeichnet, dass** das Verfahren die folgenden Schritte umfasst:

   - Anwendung auf einer Oberfläche von wenigstens einer Schicht von Kohlenwasserstoffasphalt nach einem der Ansprüche 1 bis 8, um eine Integrationsschicht zu bilden;
   - Integration in die Integrationsschicht, bevorzugt in ihrem oberen Bereich, von Leitungen einer Wärmetauschervorrichtung.

13. Verfahren nach dem vorhergehenden Anspruch, **dadurch gekennzeichnet, dass** die Leitungen der Wärmetauschervorrichtung in der Integrationsschicht vertieft werden vor der Verdichtung des Kohlenwasserstoffasphalts.

14. Verfahren nach Anspruch 12, **dadurch gekennzeichnet, dass** die Leitungen der Wärmetauschervorrichtung in die Aussparungen integriert sind, geschaffen in der Oberfläche der Integrationsschicht.

**Claims**

1. Asphalt mix chosen from hot mix or warm mix comprising a granular fraction and a hydrocarbon-based binder, **characterised in that** the elements of the granular fraction of the asphalt mix have sizes comprised between 0 mm and 10 mm and the granular fraction comprises

   - 4 to 15% by volume, compared to the total volume of the granular fraction, of fines, having a size less than 0.063 mm
   - 15 to 80% by volume, compared to the total volume of the granular fraction, of sand, having a size between 0.063 mm and 2 mm
   - 5 to 81% by volume, compared to the total volume of the granular fraction, of aggregates, having a size between 2 mm and 10 mm

   **and in that** the hydrocarbon-based binder is a 35/50 grade bitumen and comprises a workability additive, having a melting point above 60 °C and below 130°C, said asphalt mix being resistant to rutting, compact and workable, with a workability, measured with a Nynas workability meter at the working temperature of the asphalt mix, of less than 350N and insulating with a thermal conductivity, $\lambda$, of less than 1 W/m.K.

2. Asphalt mix according to any of the preceding claims, **characterised in that** the binder content advantageously varies from 7.5 to 24% by volume, compared to the total volume of the asphalt mix.

3. Asphalt mix according to any of the preceding claims, **characterised in that** their working temperature is below 130°C, advantageously comprised between 60°C and 120°C, more advantageously comprised between 90°C and 120°C.

4. Asphalt mix according to any of the preceding claims, **characterised in that** one or more of the following characteristics are complied with:

   - the workability, measured with a Nynas workability meter at the working temperature of the asphalt mix, is less than 300N, advantageously less than 250N;
   - the compactness of the asphalt mix measured by means of a gyratory shear press at 60 gyrations, according to the NF EN 12697-31 Standard of August 2007, is greater than 90%;
   - they are resistant to rutting with a percentage rutting after 30,000 cycles less than 7.5%, advantageously less than 5%.

5. Asphalt mix according to any of the preceding claims , **characterised in that** the binder comprises from 1% to 6% by weight of said workability additive, compared to the weight of the binder, advantageously the workability additive is a trigylceride of fatty acids, the fatty acid being selected from the group constituted of saturated fatty acids comprising from 12 to 30 carbon atoms, optionally substituted by at least one hydroxyl function or by a $C_1$-$C_4$ alkyl radical in particular the fatty acid is selected from the group constituted of 12-hydroxy-octadecanoic acid, hexadecanoic acid, octadecanoic acid, 9,10-dihydroxy-octadecanoic acid, icosanoic acid, nonadecanoic acid, and mixtures thereof.

6. Asphalt mix according to any of the preceding claims, **characterised in that** the binder comprises an elastomer, advantageously selected from random copolymers, multi-sequenced or star-shaped, of styrene and butadiene or isoprene in all proportions.

7. Asphalt mix according to any of the preceding claims, **characterised in that** the granular fraction comprises elements selected from light and non-absorbent aggregates having a specific gravity comprised between 1.1 t/m$^3$ and 1.5 t/m$^3$ and a water absorption coefficient between 6% and 15%.

8. Road surfacing comprising at least one layer of the asphalt mix according to any of the preceding claims.

9. Road surfacing according to the preceding claim, **characterised in that** the layer of the asphalt mix according to any of claims 1 to 7 constitutes an integration layer comprising pipes of a heat exchanger device.

10. Road surfacing according to the preceding claim, **characterised in that** the thickness of the integration layer varies from d to 10 cm, advantageously from d to 8 cm, with d representing the diameter of the pipes.

11. Road surfacing according to any of claims 9 to 10, **characterised in that** it comprises, above the integration layer, at least one road surface layer.

12. Method for manufacturing a road surfacing according to any of claims 9 to 11 comprising the pipes of a heat exchanger device, **characterised in that** the method comprises the following steps:

    - Application on a surface of at least one layer of the asphalt mix according to any of claims 1 to 8 to form an integration layer;
    - Integration in the integration layer, preferably in its upper part, of pipes of a heat exchanger device.

13. Method according to the preceding claim, **characterised in that** the pipes of the heat exchanger device are indented into the integration layer before compacting the asphalt mix.

14. Method according to claim 12, **characterised in that** the pipes of the heat exchanger device are integrated in reservations created on the surface of the integration layer.

Fig. 1

Fig. 2

Fig. 3

Fig. 4

**RÉFÉRENCES CITÉES DANS LA DESCRIPTION**

**Documents brevets cités dans la description**

- EP 2062941 A
- WO 2007143016 A
- WO 2011153267 A
- WO 2006119354 A
- FR 2852018

**Littérature non-brevet citée dans la description**

- Use of Modified Bituminous Binders, Special Bitumens and Bitumens with Additives in Road Pavements. Guide Technique écrit par l'Association Internationale de la Route (AIPCR). LCPC, 1999